# EUROPEAN PATENT SPECIFICATION

(11) **EP 2 355 474 B1**
(45) Date of publication and mention of the grant of the patent: **05.09.2018**
(21) Application number: 10168410.8
(22) Date of filing: 05.07.2010
(51) Int. Cl.: H04M 3/42

(54) **Transfer of telephony functions associated with a wireless handheld telephony device to another telephony device**
Übertragung von Telefonfunktionen von einem drahtlosen tragbaren Telefonapparat zu einem anderen Telefonapparat
Transfert de fonctions de téléphonie associées à un dispositif de téléphonie portable sans fil à un autre dispositif de téléphonie

(30) Priority: 21.01.2010 US 297005 P
(43) Date of publication of application: 10.08.2011
(73) Proprietor: BlackBerry Limited, Waterloo, ON N2K 0A7 (CA)
(72) Inventor: Heit, David, Lawrence, Waterloo Ontario N2L 5Z5 (CA); Ritter, Eric, Martin, Waterloo Ontario N2L 5Z5 (CA)
(74) Representative: MERH-IP Matias Erny Reichl Hoffmann Patentanwälte PartG mbB

(56) References cited:
- EP-A2- 0 939 565
- WO-A1-95/14360
- US-A1- 2003 092 451
- US-A1- 2006 072 591
- US-A1- 2006 172 770
- US-A1- 2008 292 074
- US-B1- 7 171 221

## Description

### FIELD

The present application relates to wireless handheld telephony devices and, more particularly, to systems and methods for transferring authorized or other telephony functions associated with a wireless handheld telephony device to a second telephony device.

### BACKGROUND

Many users of telephony devices may use a wireless handheld telephony device, such as cellular telephone, PDA or BlackBerry™ device or the like, for some or all of their communications. For various reasons, those users may, at times, wish to temporarily transfer some or all of the functionality of their wireless handheld telephony device to a stationary or landline telephony device ("hard phone"). For example, a user may be assigned a temporary office (or "hotel cube") when visiting a corporate office. The hard phone located in the temporary office may have an unused extension with no specific identity. The user may wish to transfer some or all of their user identity to the hard phone. The ability to make such transfers can, for example, improve the security (e.g., the security of communications from eavesdroppers), the comfort of the user, the economics of communications (such, for example, where a wireless telephone subscription disfavors extended wireless use) and other factors.

Document WO-95/14360-A1 discloses a method for subscriber identification in a fixed network telephone system so as to direct the telephone services available at the subscriber's own system to the telephone (P) currently used by him. The method comprises the steps of: reading the subscriber's identification data needed for registration from the subscriber's personal processor card (C) or the like in a terminal equipment (P); receiving the subscriber's identification data (IMSI) at a local exchange (LE); transferring the subscriber's identification data (IMSI) to the subscriber's own system for registration and to provide services at the telephone (P) currently used by the subscriber.

Document US-2006/072591-A1 discloses methods and systems for forwarding calls associated with a first telephone to a second telephone are disclosed. One of the first telephone and the second telephone is configured to send an instruction to a first telephone network associated with the first telephone to forward calls intended for the first telephone to a destination telephone associated with a telephone network different from the first telephone network. The second telephone is associated with a public switched telephone network. The destination telephone is the second telephone. A processor associated with one of the first telephone and the second telephone is configured to sense the presence of the first telephone within the vicinity of the second telephone. When the first telephone is within the vicinity, the processor sends the instruction.

US2008/0292074A1 discloses techniques for automatic routing of communications to user endpoints, in which a system receives configuration information relating to forwarding of communications in a network from a first endpoint to other endpoints. Presence information may also be received for the endpoints. The system may forward communications destined for a first of the plurality of endpoints to a second of the plurality of endpoints based on the configuration information and the presence information.

### SUMMARY

According to one aspect, there is provided a method according to claim 1 of the appended claims.

According to another aspect, there is provided a system according to claim 10 of the appended claims.

The disclosure provides systems, methods, and computer programming products for enabling the transfer of telephony functions from wireless handheld telephony devices to other telephony devices.

For example, in some aspects, the present application provides systems comprising servers or other computers or communications devices, such as enterprise or other telecommunications servers, configured to transfer voice capabilities and one or more additional telephony functions, related to command and control of communications, associated with wireless handheld telephony devices to second telephony devices. Such systems can, for example, include data processors, media readable by the data processors, and communications subsystems. The communications subsystems can be adapted to process signals representing communications by and between the wireless handheld telephony device, the second telephony device, and the processor. The media readable by the data processor can include coded program instructions adapted to cause the processor to, upon receipt of signals representing a request to transfer at least the voice capabilities associated with the wireless handheld telephony device to the second telephony device, transferring at least the voice capabilities and at least one of the additional telephony functions related to command and control of communications to the second telephony device; and to, upon receipt of signals representing a request pursuant to the same or another telephony function, setting up a voice communications session between the second telephony device and a third telephony device.

All or various portions of such processes may be implemented using data processors, media readable by the data processors, and/or communications subsystems incorporated within wireless handheld telephony devices or other non-server class computer and/or communications devices.

In some other aspects, the present application provides wireless handheld telephony devices comprising wireless signal receivers, wireless signal transmitters, data processors, and media readable by the data processors. The media readable by the data processors can include coded program instructions adapted for enabling a wireless handheld telephony device to temporarily cause transfer to a second telephony device of voice capabilities and one or more additional telephony functions, related to command and control of communications, associated with the wireless handheld telephony device, by using one or more wireless signals received directly from the second telephony device to provide a call server managing the wireless handheld telephony device command signals configured to cause the call server to communicate with the second telephony device in place of the wireless handheld telephony device.

In some other aspects, the present application provides computer readable media adapted for controlling and otherwise implementing such functions, and features thereof.

In some other aspects, the present application provides methods of controlling and otherwise implanting such functions, and features thereof.

Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of subject matter disclosed herein, and in which:
Figure 1 shows a schematic diagram of an example system for managing telephone and other communications in accordance with the disclosure herein;
Figures 2-5 show schematic diagrams of example embodiments of details of a system such as that shown in Figure 1;
Figure 6 shows a schematic diagram of an example system for managing telephone and other communications in accordance with the disclosure herein;
Figure 7 provides schematic diagrams of wireless handheld telephony devices suitable for use in implementing the systems, devices, and methods disclosed herein;
Figure 8 shows a schematic flow diagram of an example of a method of transferring one or more telephony functions associated with a wireless handheld telephony device to a second telephony device in accordance with the disclosure herein;
Figure 9 is a signaling diagram generally showing an example of a transfer of one or more telephony functions associated with a wireless handheld telephony device to a second telephony device in accordance with the disclosure herein;
Figures 10A and 10B are signaling diagrams generally showing an example of an incoming communication after one or more telephony functions associated with a wireless handheld telephony device have been transferred to a second telephony device in accordance with the disclosure herein; and
Figures 11A and 11B are signaling diagrams generally showing an example of an outgoing communication after one or more telephony functions associated with a wireless handheld telephony device have been transferred to a second telephony device.
Figures 12A and 12B are schematic diagrams of examples of systems for managing telephone and other communications in accordance with the disclosure herein.

Similar reference numerals may have been used in different figures to denote similar components.

### DESCRIPTION OF EXAMPLE EMBODIMENTS

Embodiments of the present application are not limited to any particular operating system, mobile device architecture, server architecture, or computer programming language.

The present application relates to the control and management of communications. Although reference may be made to "calls" in the description of example embodiments below, it will be appreciated that the described systems and methods are applicable to session-based communications in general and not limited to voice calls, and that references to "calls" are intended to refer to session-based communications sessions of any type, including voice, data or text communications, unless clearly indicated otherwise by context. It will also be appreciated that the systems and methods may not be limited to sessions and may be applicable to messaging-based communications in some embodiments.

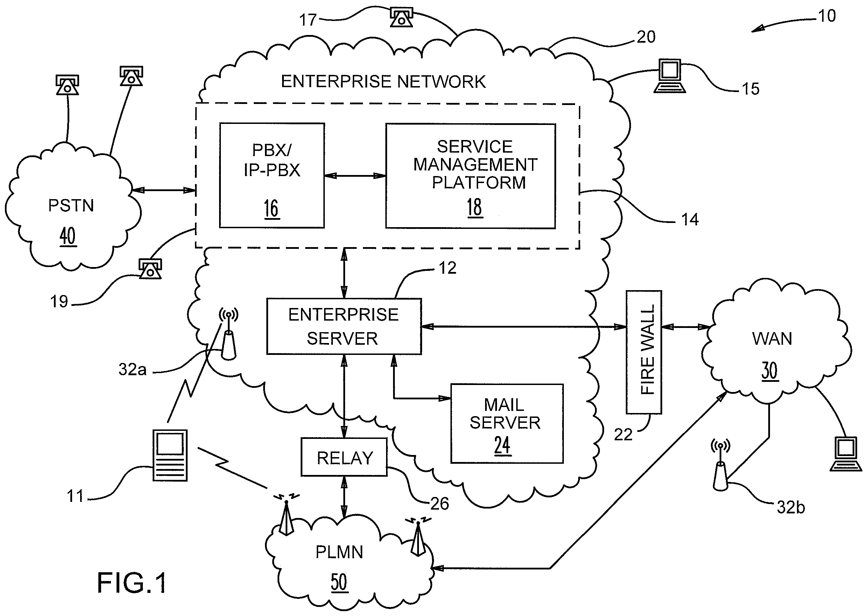

Reference is now made to Figure 1, which shows, in block diagram form, an example of a system, generally designated 10, for the control and management of communications, suitable for use in implementing the systems and methods disclosed herein. System 10 includes an enterprise or business communications system 20, which may include a local area network (LAN). In the description below, the enterprise or business system 20 may be referred to as an enterprise network 20. It will be appreciated that enterprise network 20 may include more than one network and may be located in multiple geographic areas in some embodiments.

Enterprise network 20 may be connected, for example through a firewall 22, to a wide area network (WAN) 30, such as the Internet. Enterprise network 20 may also be connected to a public switched telephone network (PSTN) 40 via direct inward dialing (DID) trunks or primary rate interface (PRI) trunks.

Enterprise network 20 may also communicate with a public land mobile network (PLMN) 50, which may also be referred to as a wireless wide area network (WWAN) or, in some cases, a cellular network. Connection with the PLMN 50 may be made via a relay 26, as known in the art.

Enterprise network 20 may also provide one or more wireless local area networks (WLANs) 32a featuring wireless access points. Other WLANs 32 may exist outside enterprise network 20. For example, WLAN 32b may be connected to WAN 30.

System 10 may include and/or interact with a number of enterprise-associated mobile devices 11 (only one shown). Mobile device(s) 11 may include devices equipped for cellular communication through the PLMN 50, mobile devices equipped for Wi-Fi communications over one of the WLANs 32, and/or dual-mode devices capable of both cellular and WLAN communications. WLANs 32 may be configured in accordance with one of the IEEE 802.11 specifications.

It will be understood that the mobile devices 11 include one or more radio transceivers and associated processing hardware and software to enable wireless communications with the PLMN 50 and/or one of the WLANs 32. In various embodiments, the PLMN 50 and mobile devices 11 may be configured to operate in compliance with any one or more of a number of wireless protocols, including GSM, GPRS, CDMA, EDGE, UMTS, EvDO, HSPA, 3GPP, or a variety of others. It will be appreciated that the mobile device 11 may roam within the PLMN 50 and across PLMNs, in for example any of a variety of known manners, as the user moves. In some instances, the dual-mode mobile devices 11 and/or enterprise network 20 are configured to facilitate roaming between the PLMN 50 and a WLAN 32, and are thus capable of seamlessly transferring sessions (such as voice calls) from a connection with the cellular interface of the dual-mode device 11 to the WLAN 32 interface of the dual-mode device 11, and vice versa.

Enterprise network 20 typically includes a number of networked servers, computers, and other devices. For example, enterprise network 20 may connect one or more desktop or laptop computers 15 (one shown). The connection may be wired or wireless in some embodiments. Enterprise network 20 may also connect to one or more digital telephone sets 17 (one shown).

Enterprise network 20 may include one or more mail servers, such as mail server 24, for coordinating the transmission, storage, and receipt of electronic messages for client devices operating within enterprise network 20. Typical mail servers include the Microsoft Exchange Server™ and the IBM Lotus Domino™ server. Each user within the enterprise typically has at least one user account within enterprise network 20. Associated with each user account is message address information, such as an e-mail address. Messages addressed to a user message address are stored on enterprise network 20 in the mail server 24. The messages may be retrieved by the user using a messaging application, such as an e-mail client application. The messaging application may be operating on a user's computer 15 connected to enterprise network 20 within the enterprise. In some embodiments, the user may be permitted to access stored messages using a remote computer, for example at another location via the WAN 30 using a VPN connection. Using the messaging application, the user may also compose and send messages addressed to others, within or outside enterprise network 20. The messaging application causes the mail server 24 to send a composed message to the addressee, often via the WAN 30.

The relay 26 serves to route messages received over the PLMN 50 from the mobile device 11 to the corresponding enterprise network 20. The relay 26 also pushes messages from enterprise network 20 to the mobile device 11 via the PLMN 50.

In the embodiment shown, enterprise network 20 also includes an enterprise server 12. Together with the relay 26, the enterprise server 12 can function to redirect, copy, or relay incoming e-mail messages addressed to a user's e-mail address within enterprise network 20 to the user's mobile device 11 and to relay incoming e-mail messages composed and sent via the mobile device 11 out to the intended recipients within the WAN 30 and/or elsewhere. Among other functions, enterprise server 12 and relay 26 together can facilitate "push" e-mail service for the mobile device 11 enabling the user to send and receive e-mail messages using the mobile device 11 as though the user were connected to an e-mail client within enterprise network 20 using the user's enterprise-related e-mail address, for example on computer 15.

As is typical in many enterprises, enterprise network 20 can include one or more Private Branch eXchanges (although in various embodiments the PBX(s) may be standard PBX(s) or IP-PBX(s), for simplicity the description below uses the term PBX to refer to both) 16 having a connection with the PSTN 40 for routing incoming and outgoing voice calls to and from digital and/or analog telephones or other telephony devices for the enterprise. PBX 16 is connected to the PSTN 40 via DID trunks or PRI trunks, for example. PBX 16 may use ISDN signaling protocols for setting up and tearing down circuit-switched connections through the PSTN 40 and related signaling and communications. In some embodiments, PBX 16 may be connected to one or more conventional analog telephones 19. PBX 16 may also be connected to enterprise network 20 and, through it, to telephone terminal devices, such as digital telephone sets 17, softphones operating on computers 15, etc. Within the enterprise, each individual may have an associated extension number, sometimes referred to as a PNP (private numbering plan), or direct dial phone number. Calls outgoing from PBX 16 to the PSTN 40 or incoming from the PSTN 40 to PBX 16 are typically circuit-switched calls. Within the enterprise, e.g. between PBX 16 and terminal devices, voice calls are often packet-switched calls, for example Voice-over-IP (VoIP) calls.

Enterprise network 20 may include a Service Management Platform (SMP) 18 for performing aspects of messaging or session control, such as call control and advanced call processing features. SMP 18 may, in some cases, also perform some media handling. Collectively SMP 18 and PBX 16 may be referred to as the enterprise communications platform, generally designated 14. It will be appreciated that the enterprise communications platform 14 and, in particular, SMP 18, is implemented on one or more servers having suitable communications interfaces for connecting to and communicating with PBX 16 and/or DID/PRI trunks. Although SMP 18 may be implemented on a stand-alone server, it will be appreciated that it may be implemented into an existing control agent/server as a logical software component. As will be described below, SMP 18 may be implemented as a multi-layer platform.

For devices such as telephony devices 11, 19 controlled by or otherwise associated with it, enterprise communications platform 14 can implement switching to connect session legs and may provide conversion between, for example, a circuit-switched call and a VoIP call, or connect legs of other media sessions. Such calls/sessions may be set up and modified on behalf of devices 11, 19 and any desired telephony devices, within or outside enterprise network 20, including for example devices 19, 107 connected to PSTN 40. In some embodiments, in the context of voice calls the enterprise communications platform 14 provides a number of additional functions including automated attendant, interactive voice response, call forwarding, voice mail, etc. It may also implement certain usage restrictions on enterprise users, such as blocking international calls or 1-900 calls. In many embodiments, Session Initiation Protocol (SIP) may be used to set up, manage, and terminate media sessions for voice calls. Other protocols may also be employed by the enterprise communications platform 14, for example, Web Services, Computer Telephony Integration (CTI) protocol, Session Initiation Protocol for Instant Messaging and Presence Leveraging Extensions (SIMPLE), and various custom Application Programming Interfaces (APIs), as will be described in greater detail below.

One of the capabilities of enterprise communications platform 14 is to extend the features of enterprise telephony to mobile device(s) 11. For example, enterprise communications platform 14 may allow mobile device(s) 11 to perform functions akin to those normally available on a standard office telephone, such as the digital telephone set 17 or analog telephone set 15. Example features may include direct extension dialing, enterprise voice mail, conferencing, call transfer, call park, etc. As further described elsewhere herein, enterprise communications platform 14 can further provide functions such as transfer of corresponding ends of existing communications sessions from one or more mobile devices 11 to wired telephony devices 19 associated with platform 14.

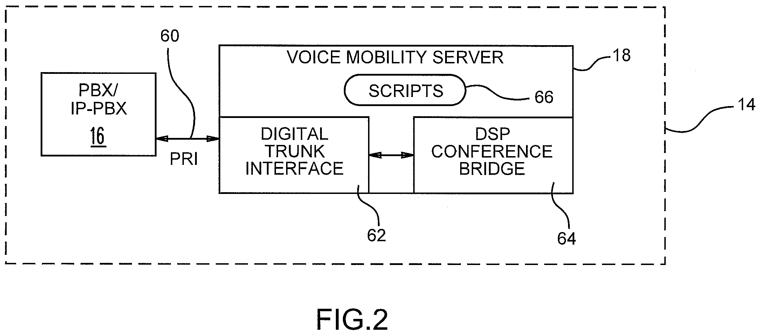

Reference is now made to Figures 2 to 4, which show example embodiments of enterprise communications system 14. Again, although references are made below to "calls" or call-centric features it will be appreciated that the architectures and systems depicted and described are applicable to session-based (e.g., voice) communications in general and, in some instances, to text, image, or other messaging-based communications.

Figure 2 illustrates an embodiment intended for use in a circuit-switched TDM context. PBX 16 is coupled to SMP 18 via PRI connection 60 or other suitable digital trunk. In some embodiments, PRI connection 60 may include a first PRI connection, a second PRI connection, and a channel service unit (CSU), wherein the CSU is a mechanism for connecting computing devices to digital mediums in a manner that allows for the retiming and regeneration of incoming signals. It will be appreciated that there may be additional or alternative connections between PBX 16 and SMP 18.

In this embodiment, SMP 18 assumes control over both call processing and the media itself. This architecture may be referred to as "First Party Call Control". Many of the media handling functions normally implemented by PBX 16 are handled by SMP 18 in this architecture. Incoming calls addressed to any extension or direct dial number within the enterprise, for example, are always first routed to SMP 18. Thereafter, a call leg is established from SMP 18 to the called party within the enterprise, and the two legs are bridged. Accordingly, SMP 18 includes a digital trunk interface 62 and a digital signal processing (DSP) conferencing bridge 64. DSP conferencing bridge 64 performs the bridging of calls for implementation of various call features, such as conferencing, call transfer, etc. Digital trunk interface 62 may be implemented as a plurality of telephonic cards, e.g. Intel Dialogic cards, interconnected by a bus and operating under the control of a processor. Digital trunk interface 62 may also be partly implemented using a processor module such as, for example, a Host Media Processing (HMP) processor.

SMP 18 may include various scripts 66 for managing call processing. Scripts 66 are implemented as software modules, routines, functions, etc., stored in non-volatile memory and executed by the processor of SMP 18. Scripts 66 may implement call flow logic, business logic, user preferences, call service processes, and various feature applications.

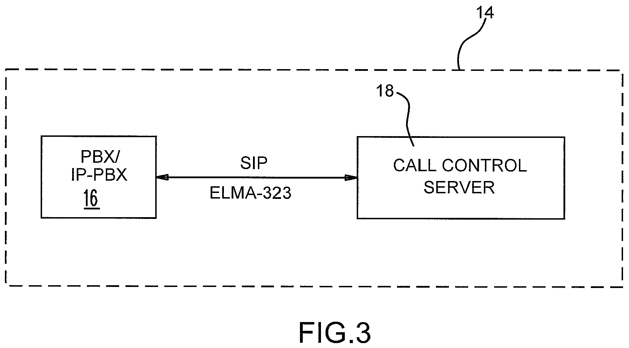

Figure 3 shows another embodiment in which PBX 16 performs the functions of terminating and/or bridging media streams, but call control functions are largely handled by SMP 18. In this embodiment, SMP 18 may be referred to as a call control server 18. This architecture may be referred to as "Third-Party Call Control".

Call control server 18 is coupled to PBX 16, for example through the LAN, enabling packet-based communications and, more specifically, IP-based communications. In one embodiment, communications between PBX 16 and call control server 18 are carried out in accordance with SIP. In other words, call control server 18 uses SIP-based communications to manage the set up, tear down, and control of media handled by PBX 16. In one example embodiment, the call control server 18 may employ a communications protocol conforming to the ECMA-269 or ECMA-323 standards for Computer Supported Telecommunications Applications (CSTA).

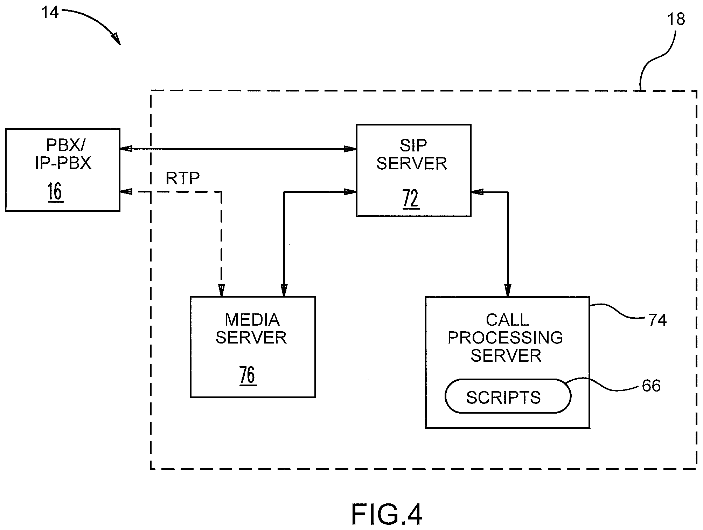

Figure 4 shows yet another embodiment of enterprise communications system 14. This embodiment reflects the adaptation of an existing set of call processing scripts to an architecture that relies on third-party call control, with separate call control and media handling. SMP 18 includes a call processing server 74. The call processing server 74 includes the scripts or other programming constructs for performing call handling functions. SMP 18 also includes a SIP server 72 and a media server 76. The separate SIP server 72 and media server 76 logically separate the call control from media handling. SIP server 72 interacts with the call processing server 74 using a computer-implemented communications handling protocol, such as one of the ECMA-269 or ECMA-323 standards. These standards prescribe XML based messaging for implementing Computer Supported Telecommunications Applications (CSTA).

SIP server 72 interacts with the media server 76 using SIP-based media handling commands. For example, SIP server 72 and media server 76 may communicate using Media Server Markup Language (MSML) as defined in IETF document Saleem A., "Media Server Markup Language", Internet Draft, draft-saleem-msml-07, August 7, 2008. The media server 76 may be configured to perform Host Media Processing (HMP).

Other architectures or configurations for enterprise communications system 14 will be appreciated by those ordinarily skilled in the art.

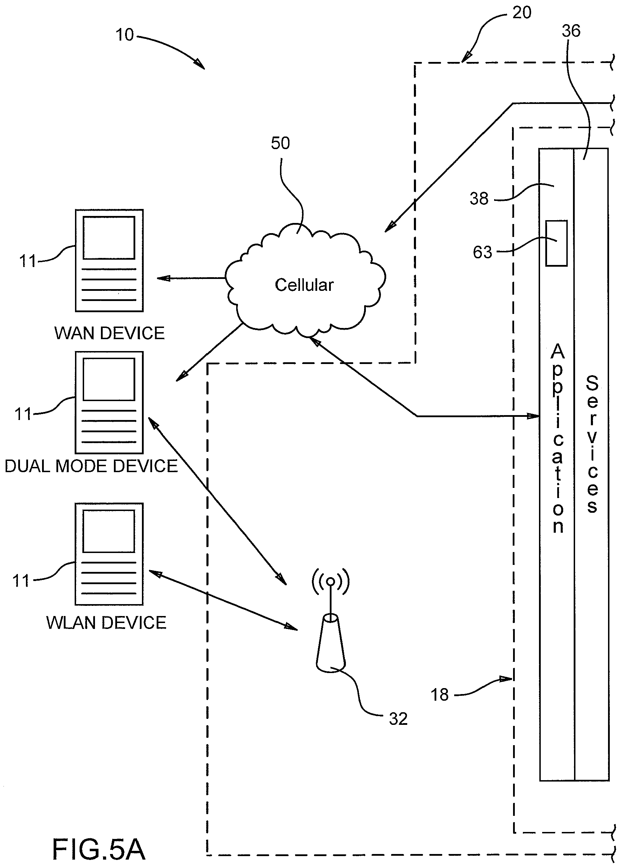

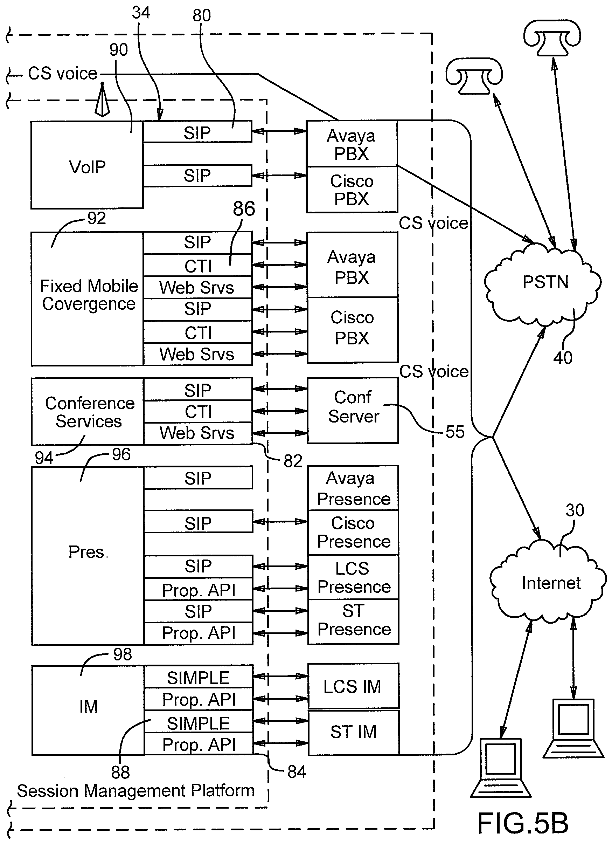

Reference is now made to Figure 5, which shows an embodiment of enterprise communications system 14 with a Third Party Call Control architecture. In this embodiment, SMP 18 is a multi-layer platform that includes a protocol layer 34, a services layer 36 and an application layer 38. Protocol layer 34 includes a plurality of interface protocols configured for enabling operation of corresponding applications in the application layer 38. The services layer 36 includes a plurality of services that can be leveraged by the interface protocols to create richer applications. Finally, the application layer 38 includes a plurality of applications that are exposed out to the communication devices and that leverage corresponding ones of the services and interface protocols for enabling the applications.

Specifically, protocol layer 34 preferably includes protocols which allow media to be controlled separate from data. For example, protocol layer 34 can include, among other things, a Session Initiation Protocol or SIP 80, a Web Services protocol 82, an Application Programming Interface or API 84, a Computer Telephony Integration protocol or CTI 86, and a Session Initiation Protocol for Instant Messaging and Presence Leveraging Extensions or SIMPLE protocol 88. It is contemplated that the interface protocols 80-88 are plug-ins that can interface directly with corresponding servers in enterprise network 20, which will be further described below.

For the purposes of this disclosure, SIP 80 will be utilized, although it is appreciated that system 10 can operate using the above disclosed or any other suitable protocols. As known by those skilled in the relevant arts, SIP is the IETF (Internet Engineering Task Force) standard for multimedia session management, and more specifically is an application-layer control protocol for establishing, maintaining, modifying and terminating multimedia sessions between two or more endpoints. As further known by those skilled in the relevant arts, SIP protocol 80 includes two interfaces for signaling: SIP-Trunk (hereinafter referred to as "SIP-T") and SIP-Line (hereinafter referred to as "SIP-L"). Specifically, SIP-T interface is utilized when the endpoint is a non-specific entity or not registered (i.e., when communicating between two network entities). In contrast, SIP-L interface is utilized when the endpoint is registered (i.e., when dialing to a specific extension). The specific operation of system 10 utilizing SIP 80 will be described in further detail below.

SMP 18 also includes a plurality of enablers, among other things, a VoIP enabler 90, a Fixed Mobile Convergence or FMC enabler 92, a conference services/call and/or session transfer enabler 94, a presence enabler 96, and an Instant Messaging or IM enabler 98. Each of the enablers 90-98 can be used by corresponding services in the services layer 36 that combine one or more of the enablers. Each of the applications in the application layer 38 can then be combined with one or more of the services to perform the desired application. For example, a phone call service may use the VoIP or PBX enabler, and an emergency response application may use the phone call service, an Instant Messenger service, a video call service, and email service and/or a conference service.

Application layer 38 may include a conference services application 63 that, together with the conference services enabler 94, enables multiple communication devices (including desk telephones and personal computers) to participate in a conference call through use of a centralized conference server 55. As seen in Figure 5, Conference server 55 is provided in enterprise network 20 and is in communication with the conference services enabler 94 preferably through SIP protocol 80, although it is recognized that additional protocols that control media separate from data may be appropriate, such as the Web Services protocol 82 or the CTI protocol 86. Conference call server 55 is configured for directing media and data streams to and from one or more communication devices (i.e., mobile devices 11, telephones 17, and computers 15).

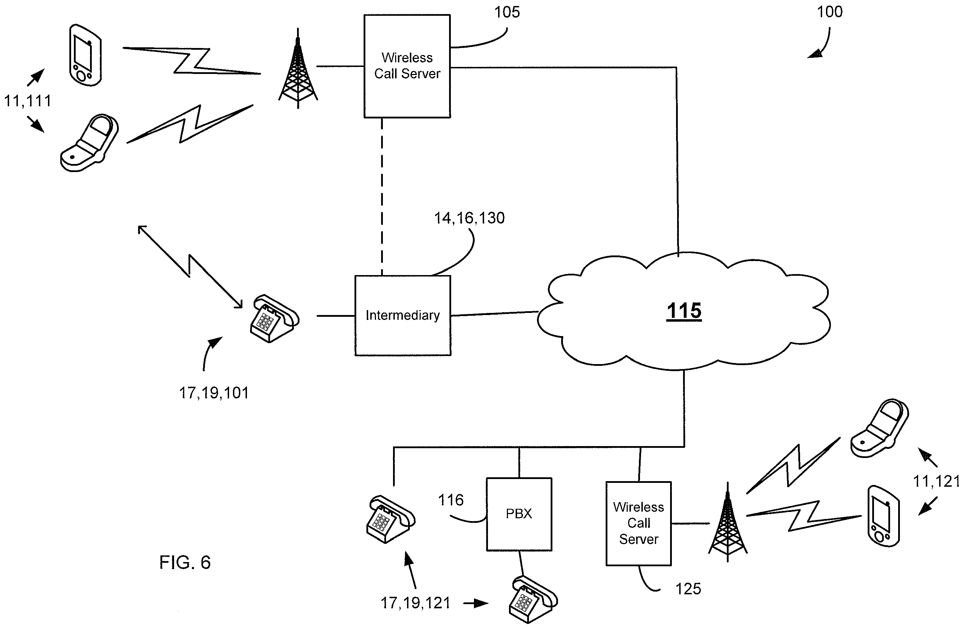

Reference is now made to Figure 6, which shows, in block diagram form, an example system for transferring one or more authorized and/or other telephony functions associated with wireless handheld telephony device 111 to a second telephony device 101 in accordance with the disclosure herein. The system comprises at least one third telephony device 121 which may engage in communication with wireless handheld telephony device 111 and/or second telephony device 101 through PSTN or other communication cloud or network 115, such as PSTN 40 or PLMN 50 of Figure 1. In some embodiments, the system may be a hosted environment, such as a corporate or enterprise environment, or it may be a switching environment.

Communication cloud 115 may be adapted for carrying voice communications according, for example, to any of the several IP or non-IP protocols described above, or any other suitable protocols or methods. For example, in some embodiments, communication cloud 115 may comprise or otherwise interact with a PSTN 40 and/or PLMN 50. Communication cloud 115 may also be capable of carrying image, text, or other data. For example, communication cloud 115 may comprise a WAN 30, such as the Internet.

Wireless handheld telephony device(s) 111 may be any type of wireless handheld device with telephony capabilities including, but not limited to, cellular telephones, BlackBerry™ devices, PDAs and other devices described herein. Such wireless handheld telephony devices 111 can facilitate voice telephonic and/or other communications through, for example, wireless call server(s) 105. Call server(s) 105 can comprise any systems, processors, and/or other components suitable for use in implementing the systems and functions described herein. For example, call server(s) 105 can include any or all suitable components of enterprise network 20, including for example any or all of the components communications platform 14 and/or enterprise server 12.

At least one third telephony device 121 can include any type of telephony devices suitable for accomplishing the purposes described herein, including, but not limited to, landline or wired telephones, such as VOIP protocol or other digital telephone sets 17, analog telephone sets 15, and/or wireless telephony devices 11 accessible through, for example, wireless call servers 125. One or more of such third telephony devices 121 may also be enterprise telephones accessible through, for example, a PBX 116. PBX 116 may or may not be the same as PBX 16. Wireless call server 125 may or may not be the same as wireless call server 105.

As explained herein, a user of a wireless handheld telephony device 111 may, in various circumstances, wish to transfer one or more telephony functions associated with wireless handheld telephony device 111 to a second telephony device 101. This may be desirable when, for example, the user of wireless handheld telephony device 111 is in a temporary office or cubical with a hard phone. The user may wish to transfer the telephony functions to second telephony device 101 because, for example, the battery on wireless handheld telephony device 111 is low or the user does not wish to drain the battery further, when second telephony device 101 is considered more secure, when wireless audio quality or wireless signal is poor or when the user of wireless handheld telephony device 111 wishes to use some of the functionality available on second telephony device 101.

Communication functions provided by second telephony device 101 may be routed through an intermediary device 130. In some embodiments, second telephony device 101 may be an enterprise telephony device configured to communicate through intermediary 130 comprising, for example, PBX 16. In other embodiments, second telephony device 101 may be a public telephony device and may be configured to communicate through intermediary 130 which may, for example, comprise a switching environment. Second telephony device 101 may be a wired device or may be connected to intermediary 130 wirelessly such as, for example, through a Wi-Fi connection.

A second telephony device 101 controlled by a PBX or other server 16 may be controlled by the same server as the one controlling one or more wireless devices 111, or by a different server. In some embodiments, second telephony device 101 may be configured to allow voice communications to be made over the Internet, such as a device equipped with Skype™ software.

As mentioned above, in some embodiments, intermediary 130 may comprise PBX 16. It will be understood by those skilled in the relevant arts that PBX(s) 16 may comprise the service management platform 18 or the enterprise communications system 14 described in relation to Figures 1 - 5; for simplicity, they are referred to herein simply as PBX(s) 16.

In some embodiments, intermediary 130 may form part of communication cloud 115.

In some embodiments, wireless call server 105 may form part of or may be in direct communication with intermediary 130.

Second telephony device 101 may include functionality which will allow wireless handheld telephony device 111 to send and/or receive one or more wireless signals directly from second telephony device 101. Similarly, wireless handheld telephony device 111 may include functionality which will allow second telephony device 101 to send and/or receive one or more wireless signals directly from wireless handheld telephony device 111. Such signals can represent data useful for establishing communications between second telephony device 101 and wireless call server 105 which administers or is otherwise associated with wireless handheld telephony device 111.

In some embodiments, such wireless signals may be pushed from second telephony device 101 to any suitably-configured wireless handheld telephony device 111 within communications range of second telephony device 101 or vice versa. For example, second telephony device 101 may include hardware, such as a radio or wireless transmitter, capable of broadcasting such wireless signals. For example, second telephony device 101 may include BlueTooth™ capabilities. In such embodiments wireless handheld telephony device(s) 111 may be adapted to receive, interpret and further process wireless signals broadcast by second telephony device 101 in accordance with this disclosure.

Similarly, in some embodiments, such wireless signals may be pushed from wireless handheld telephony device 111 to second telephony device 101. For example, wireless handheld telephony device 111 may include hardware, such as a radio or wireless transmitter, capable of broadcasting such wireless signals. For example, wireless handheld telephony device 111 may include BlueTooth™ capabilities. In such embodiments second telephony device 101 may be adapted to receive, interpret and further process wireless signals broadcast by wireless handheld telephony device 111 in accordance with this disclosure.

In other embodiments, such wireless signals may be pulled from second telephony device 101 by wireless handheld telephony device 111 or vice versa. For example, second telephony device 101 may include a radiofrequency identification (RFID) transponder configured to respond to an inquiry signal received wirelessly from a suitably-configured RFID transmitter associated with a wireless handheld telephony device 111 within range of second telephony device 101. Similarly, wireless handheld telephony device 111 may include a RFID transponder configured to respond to an inquiry signal received wirelessly from a suitably-configured RFID transmitter associated with a second telephony device 101 within range of wireless handheld telephony device 111.

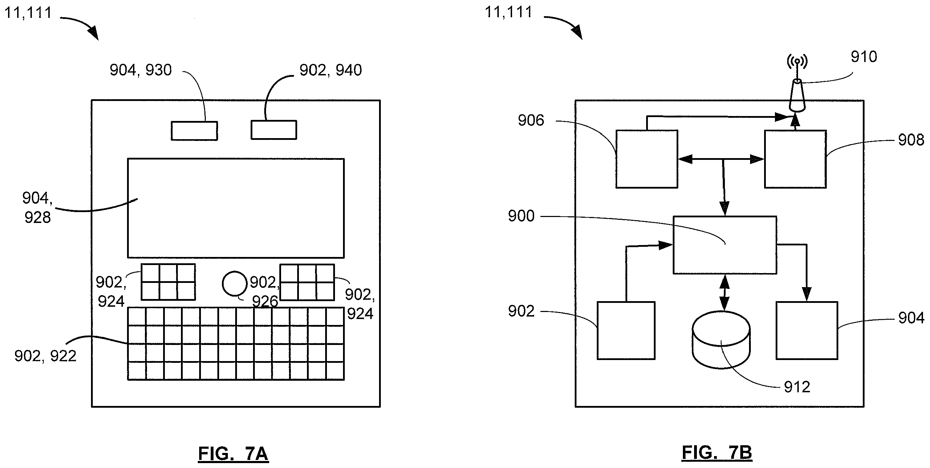

Figure 7 provides schematic diagrams of wireless handheld telephony devices 11, 111 suitable for use in implementing the systems, devices and methods disclosed herein. Figure 7a provides a schematic front view of a wireless handheld telephony device 11, 111, while Figure 7b provides a functional block diagram of components suitable for use in configuring wireless handheld telephony device 11, 111 for the purposes disclosed herein.

In the example shown in Figure 7a, wireless handheld telephony device 11, 111 comprises input means 902 and output means 904. Input means 902 can include devices such as keyboard(s) 922, function button(s)/switch(es) 924, microphone(s) 940, and pointing device(s) 926 such as a trackball, thumbwheel, etc. for providing single- or multi-stroke input for building and/or issuing command signals for use by processor(s) 900 as described herein. Input means 902 can be configured to provide various forms of input command signals to processor 900 of the handheld device, for local processing and or for output by the processor to one or more of memory(s) 912, output device(s) 904, and/or transmitter 906 for transmission to external devices such as wireless control server 105.

Output means 904 can include devices such as display(s) 928 and speaker(s) 930 for providing visual and audio outputs, respectively. As will be readily understood by those skilled in the relevant arts, input and output means or devices 902, 904, can be of any types and include any such means or devices suitable for use in accomplishing the purposes described herein. A wide variety of suitable means and devices are now known, and doubtless others will hereafter be developed. Output means 904 can be configured to process output signals provided by processor(s) 900 in response to internal processing as described herein, and/or as received from external sources such as wireless control server 105 via antenna 910 and receiver 908.

In the example shown in Figure 7b, wireless handheld telephony device 11, 111 comprises one or more processors 900, input means 902, output means 904, wireless transmitter 906, wireless receiver 908, antenna(s) 910, and memory(s) 912. One or more processors 900, wireless transmitters 906, receivers 908, and antennas 910 can be provided for use in implementing digital and/or analog voice, data, and/or command signal and communications processes. For example, separate sets of antennas 910, receivers 908, transmitters 906, processors 900, and associated memories 912 can be provided for each of voice and data communications systems, and/or one or more of such components may be used for multiple types of communications using multiple protocols. As will be readily understood by those skilled in the relevant arts, and as described further herein, such processors, transmitters, receivers, antennas, and memories can be of any types and include means or devices suitable for use in accomplishing the purposes described herein. A wide variety of suitable means and devices are now known, and doubtless others will hereafter be developed.

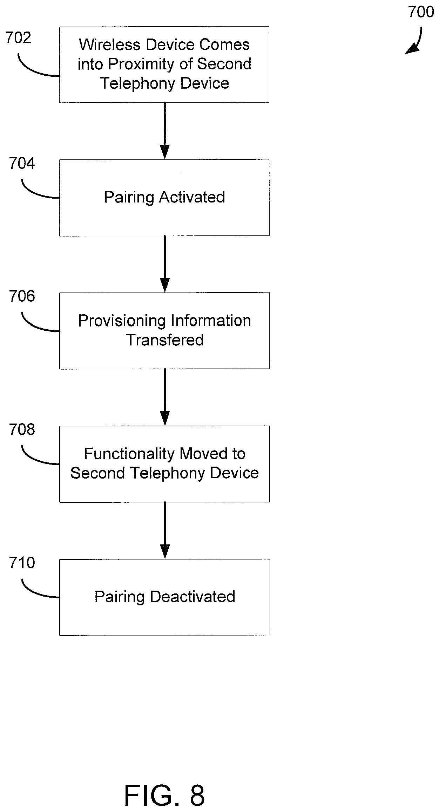

Reference will now be made to Figure 8, which shows a flow diagram representing an example of a method 700 for transferring one or more telephony functions associated with a wireless handheld telephony device 111 to a second telephony device 101. Method 700 is suitable for use, for example, in conjunction with systems 10,100 of Figures 1 and/or 6 and wireless handheld telephony devices 11, 111 of Figure 7 in implementing the disclosure herein.

A method 700 can be considered to begin at block 702 where wireless handheld telephony device 111 may come into the proximity of second telephony device 101. That is, wireless handheld telephony device 111 may come into communications range of second telephony device 101, such that wireless handheld telephony device 111 is capable of receiving the wireless signals from second telephony device 101 as explained herein.

At 704, a pairing of wireless handheld telephony device 111 and second telephony device 101 may be activated. Herein, pairing of wireless handheld telephony device 111 and second telephony device 101 is meant to refer to the transference of one or more telephony functions associated with wireless handheld telephony device 111 to second telephony device 101. The pairing of wireless handheld telephony device 111 and second telephony device 101 may be initiated, for example, by wireless handheld telephony device 111 or by second telephony device 101 or through some other means.

In some embodiments, the pairing of a wireless handheld telephony device 111 and a second telephony device 101 may be initiated by wireless handheld telephony device 111. This may be done, for example, as a result of a user activating a pairing option using, for example, an input means 902 of wireless handheld telephony device 111. Once the option has been activated, wireless handheld telephony device 111 could initiate a pairing with a second telephony device 101 within its proximity. In some embodiments, telephony devices 101 within the proximity of wireless handheld telephony device 111 may be identified using the wireless signals received from the second telephony devices 101 as discussed herein.

In the event that there is more than one telephony device 101 in proximity to wireless handheld telephony device 111, one of the telephony devices 101 may need to be selected. In some embodiments, a user may be asked to choose between the available telephony devices 101 by, for example, selecting an option on the desired telephony device 101, performing some action with wireless handheld telephony device 111 (such as, for example, activating an input means 902 or moving wireless handheld telephony device 111 closer to the desired second telephony device 101) or through some other means. In some embodiments, the wireless handheld telephony device 111 may be provided with a list of telephony devices 101 available for pairing. For example, with reference to Figures 7a and 7b, signals representing data useful for identifying available telephony devices 101 can be transmitted to an antenna 910, processed by receiver 908 of wireless handheld telephony device 111, and provided to a processor 900 as shown in Figure 7. Processor 900 can interpret the received and processed signals to provide suitably-configured output signals to a display 928 controlled by the processor 900 in such form that a human user of the device 111 can interpret them as described herein. The user may then select one of the available telephony devices 101 using, for example, an input means 902 on wireless handheld telephony device 111. In other embodiments, wireless handheld telephony device 111 may automatically select a second telephony device 101. For example, wireless handheld telephony device 111 may automatically select second telephony device 101 which is in closest proximity to it.

In other embodiments, the pairing of wireless handheld telephony device 111 and second telephony device 101 may be initiated by second telephony device 101. For example, second telephony device 101 may comprise, for example, a pairing button or other input means to be activated by a user of a wireless handheld telephony device 111 when a pairing is desired. When the pairing button or other input means is activated, the second telephone device 101 may initiate a pairing with a wireless handheld telephony device 111 which is in its proximity.

In the event that more than one wireless handheld telephony device 111 is in proximity to second telephony device 101, one wireless handheld telephony device 111 may need to be selected for pairing. In some embodiments, a user may be asked to choose between available wireless handheld telephony devices 111. This choice may be made by, for example, selecting an option on second telephony device 101, performing some action with the desired wireless handheld telephony device 111 (such as, for example, pressing a button or moving wireless handheld telephony device 111 closer to second telephony device 101) or through some other means. In other embodiments, second telephony device 101 may automatically select a wireless handheld telephony device 111. For example, wireless handheld telephony device 111 closest to second telephony device 101 may automatically be selected.

At 706, provisioning information (in the form of wireless signals, for example) is exchanged between wireless handheld telephony device 111 and second telephony device 101. In some embodiments, this information can, for example, be received by second telephony device 101 directly from wireless handheld telephony device 111 via wireless signals as explained herein. In some embodiments, an initial handshake between wireless handheld telephony device 111 and second telephony device 101 may take place to allow for identification. Once the initial handshake is complete, second telephony device 101 may send provisioning information to wireless handheld telephony device 111 such as technical capabilities (e.g. speakerphone, video, web access, etc.) as well as an identifier such as a MAC address or other a PBX identifier. Wireless handheld telephony device 111 may perform the necessary steps to cause the transfer. Alternatively, wireless handheld telephony device 111 may send the provisioning information to second telephony device 101 which may perform the necessary steps to cause the transfer.

At 708, one or more telephony functions associated with wireless handheld telephony device 111 can be transferred to second telephony device 101. The telephone functions may comprise functions which are subject to authorization or other requirement(s) imposed by an administrator(s) or other entity(ies) other than the user(s) of the wireless handheld device. For example, an administrator or billing authority of a wireless handheld device may impose restrictions or limitations on telephony functions which may be transferred, and/or an administrator of an enterprise or other telephone system associated with the second telephony device(s) to which such functions are to be transferred may impose such restrictions or limitations. As will be understood by those skilled in the relevant arts, limitations, restrictions, or other forms of maintaining authority or control over transfer of telephony functions from a wireless handheld device and/or to a second telephony device may be imposed in view of billing, security, or other issues related to such functions and/or transfer.

Thus transfer of telephony functions from a handheld wireless device to a second telephony device may be subject to authorization in order to be completed. Such authorization(s) may be imposed or otherwise implemented prior to or concurrent with a request for transfer.

The one or more telephony functions to be transferred may include some or all of the telephony functions associated with wireless handheld telephony device 111. For example, in some embodiments, only the voice stream (e.g. the Real-Time Transport Protocol (RTP) stream) is transferred to second telephony device 101. The remainder of telephony functions, such as those functions related to command and control of a communication, remain with wireless handheld telephony device 111. In these embodiments, second telephony device 101 could be a simple speaker and/or microphone with few, if any, other functions.

In other embodiments, all of the telephony functions of wireless handheld telephony device 111 may be transferred to second telephony device 101. In these embodiments, the user's whole identity can be transferred to second telephony device 101 such that second telephony device 101 may, for example, behave just as if it had been provisioned to be the user's regularly used desk phone. After the pairing has been completed, voice data and other information as well as command and control functions of wireless handheld telephony device 111 may be handled by second telephony device 101.

Transferring the one or more telephony functions to second telephony device 101 may also comprise transferring user preferences or settings, particular features and/or restrictions active on wireless handheld telephony device 111 to second telephony device 101.

Telephony functions that may be transferred in this manner may include telephony functions such as, for example, call forwarding, call holding, call transfer, call muting, call logs, caller ID, etc. User preferences relevant to communication sessions, for example preprogrammed soft button settings, volume levels, blocked callers, etc., may also be transferred. Service profile(s) associated with individual user(s) may be stored in the wireless call server 105 and may be associated with the wireless handheld telephony device 111. Transfer of telephony functions from the wireless handheld telephony device 111 to the second telephony device 101 may also include transfer of profile associations to the second telephony device 101, such that settings stored in the service profile are applied to the second telephony device 101. In some examples, one or more telephony functions that may be transferred to the second telephony device 101 may be limited or unable to be transferred, due to limitations in the second telephony device 101.

Although the telephony functions have been described as being transferred from the wireless handheld telephony device 111 to the second telephony device 101, it should be understood that such transferal may also be a duplication of one or more telephony functions, such that such functions may be available both on the wireless handheld telephony device 111 and on the second telephony device 101, rather than a strict transferal of functions.

At 710, the pairing between wireless handheld telephony device 111 and second telephony device 101 is deactivated and the one or more telephony functions are transferred back to wireless handheld telephony device 111. This may occur, for example, as a result of a user-initiated action, such as the selection of an option on wireless handheld telephony device 111 or on the second telephone device 101. In some embodiments, the deactivation may also happen automatically, for example, when the wireless device leaves the proximity of second telephony device 101. Wireless handheld telephony device 111 may know when it has left the proximity of the desk phone when one or more triggers is activated. For example, the one or more triggers may comprise the loss of a proximity heartbeat (such as a BlueTooth™ proximity heartbeat), RFID information, a location change registered by, for example, GPS or Wi-Fi Access Point/Controller feedback, direct user interaction by the press of a button or other input on wireless handheld telephony device 111 or a time based trigger which may, for example, force the removal of provisioning on second telephony device 101 after a predetermined amount of time.

When the pairing between wireless handheld telephony device 111 and second telephony device 101 is deactivated, any information related to the user of wireless handheld telephony device 111, such as the provisioning information transferred at 706 or a call log for the period of the pairing, may be deleted, overwritten, or otherwise removed from second telephony device 101. Information pertaining to any communication session(s) (e.g., call log(s), call history(ies), etc.) stored on the second telephony device 101 may also be transmitted or otherwise transferred to the wireless handheld telephony device 111 (e.g., via short distance communications such as BlueTooth™ or WiFi) and may be subsequently deleted from the second telephony device 101 upon deactivation of the pairing. Deletion of such information from the second telephony device 101 may, for example, be useful for security and/or privacy purposes.

While the steps of method 700 are shown as occurring in a particular order, it will be appreciated by those skilled in the relevant arts that many of the process steps, and portions thereof, are interchangeable and may occur in different orders than that shown without materially affecting the end results of the method 700. It will further be appreciated by such persons that not all of such steps are required in order to accomplish the purposes disclosed herein, and that further steps may be optionally implemented.

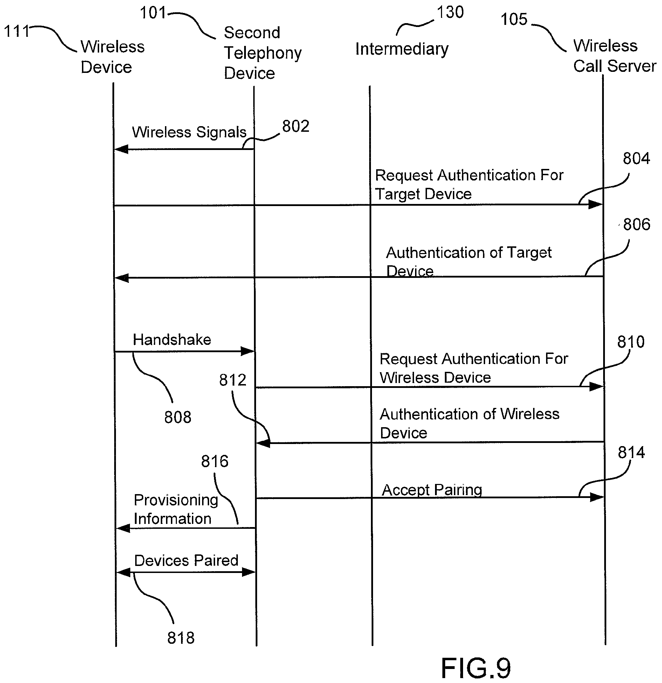

Reference will now be made to Figure 9, which shows an example of command signal interchange operations of a system 10, 100 in transferring one or more telephony functions from wireless handheld telephony device 111 to a second telephony device 101.

At 802, wireless signals may be received by wireless handheld telephony device 111 directly from second telephony device 101, as explained above in relation to Figure 6. That is, the signals may be sent directly from second telephony device 101 to wireless handheld telephony device 111 without requiring signals to be routed through, for example, PBX 16. The wireless signals may represent data useful in identifying second telephony device 101. For example, the wireless signals may help wireless handheld telephony device 111 and/or the user of wireless handheld telephony device 111 to determine with which telephony device 101 wireless handheld telephony device 111 should be paired. The wireless signals may include, for example, the telephone number and/or extension number of second telephony device 101 or other identifying information and/or information about the location of second telephony device 101. Such information may be formatted in accordance with, or compatible with any suitable protocol, such as those described herein, or may be formatted according to individual system preferences. Such signals may, for example, be received by one or more antenna(s) 910 of wireless handheld telephony device 111 and processed by receiver 908 for further processing by one or more processor(s) 900 of the device. This step may occur, for example, upon coming within wireless communications range of one or more telephony devices 101 or in response to a user input such as a pairing request.

Once second telephony device 101 which will receive the transferred functionality has been determined, at 804 a processor 900 of wireless handheld telephony device 111 can cause a signal or signals representing a request to pair with second telephony device 101 to be sent to the responsible wireless call server 105. For example, at 804 the responsible wireless call server 105 can be provided by wireless handheld telephony device 111 with signals representing a request for authentication of second telephony device 101.

At 806, wireless call server 105 responsible for controlling the telephony functions of wireless handheld telephony device 111 can, using data provided by wireless handheld telephony device 111 (which might include data provided originally by second telephony device 101), forward the request for authentication of second telephony device 101 to a PBX or other intermediary 130 controlling or otherwise responsible for administering second telephony device 101. Such data can, for example, be formatted in accordance with, or compatible with, any suitable protocols, as described herein. (Such intermediary 130 can in various embodiments be incorporated in second telephony device 101 as a software and/or hardware component thereof.)

At 808, further handshaking may occur between wireless handheld telephony device 111 and second telephony device 101. This handshake may include identifying information sent from wireless handheld telephony device 111 directly to second telephony device 101 to allow second telephony device 101 to authenticate wireless handheld telephony device 111.

At 810, second telephony device 101 can, through intermediary 130 responsible for controlling second telephony device 101, before, after, or while authorizing and/or authenticating the availability and suitability of second telephony device 101, send to the querying wireless call server 105 signals representing a request for authentication of wireless handheld telephony device 111.

As will be appreciated by those skilled in the relevant arts, authentication of device(s) 111, 101, by their responsible servers 105, 130 can be required for a wide variety of purposes, including security, accounting/billing, or control of signal traffic for bandwidth, capacity, or other reasons. This may be done, for example, in order to confirm that wireless handheld telephony device 111 is a valid end user (e.g. that the device is not using a false identity or "spoofing").

At 812, the wireless call server 105 can authenticate wireless handheld telephony device 111.

If either authentication fails, the requesting server 105, 130 and/or device 101, 111 can be notified and a new selection, or other appropriate action, may be requested.

In some embodiments, wireless call server 105 can provide to the requesting wireless handheld telephony device 111 signals representing a request for confirmation that a user of the device 111 wishes to transfer one or more functions of wireless handheld telephony device 111 to second telephony device 101. For example, wireless call server 105 can provide to wireless handheld telephony device 111 signals adapted to cause a processor 900 of the device 111 to display on an output display screen 928 of the device a request, which may be interactive, for the user of the device 111 to confirm his/her desire to complete the transfer.

In embodiments in which the request for confirmation presented to the user of wireless handheld telephony device 111 is implemented, the user can input command signals adapted to confirm or deny that the user wishes to complete transfer. In the event the user's intent to transfer the one or more functions is confirmed, further processing can be undertaken by wireless call server 105 and other system components to transfer the call session, as herein described. In the event the user declines to confirm a desire to complete transfer of the one or more functions, processing can be halted.

For example, a user of wireless handheld telephony device 111 can enter suitably-adapted keystrokes to cause processor 900 of wireless handheld telephony device 111 to provide to wireless call server 105 signals adapted for causing the server 105 to complete transfer of the one or more telephony functions.

At 816, second telephony device 101 may receive provisioning information from wireless handheld telephony device 111 or vice versa. This information may be received in a similar fashion to the wireless signals received by wireless handheld telephony device 111 at 802 or through intermediary 130.

The provisioning information may contain information required to transfer the one or more telephony functions to second telephony device 101. For example, the provisioning information may include identifying information for wireless handheld telephony device 111. This information may be stored by second device 101 and/or intermediary 130 and may be used to allow the one or more authorized telephony functions to be transferred back to wireless handheld telephony device 111 at a later time.

At 818, the devices 111,101 are paired. For example, in a corporate or enterprise environment where intermediary 130 comprises a PBX 16, extension information for wireless handheld telephony device 111 and address information for second telephony device 101 may be communicated to the PBX control software. The PBX control software may then provision second telephony device 101 with the identity of wireless handheld telephony device 111 including extension association.

Once the one or more telephony functions have be transferred to second telephony device 101, the functions may be removed from wireless handheld telephony device 111. For example, the extension identity may be removed from wireless handheld telephony device 111. Alternatively, the one or more telephony functions may become available on both telephony devices. For example, the extension identity may be maintained on both wireless handheld telephony device 111 and second telephony device 101. In the second case, if an incoming communication were received, both telephony devices may ring simultaneously and the user may be able to decide on which device to accept the incoming communication.

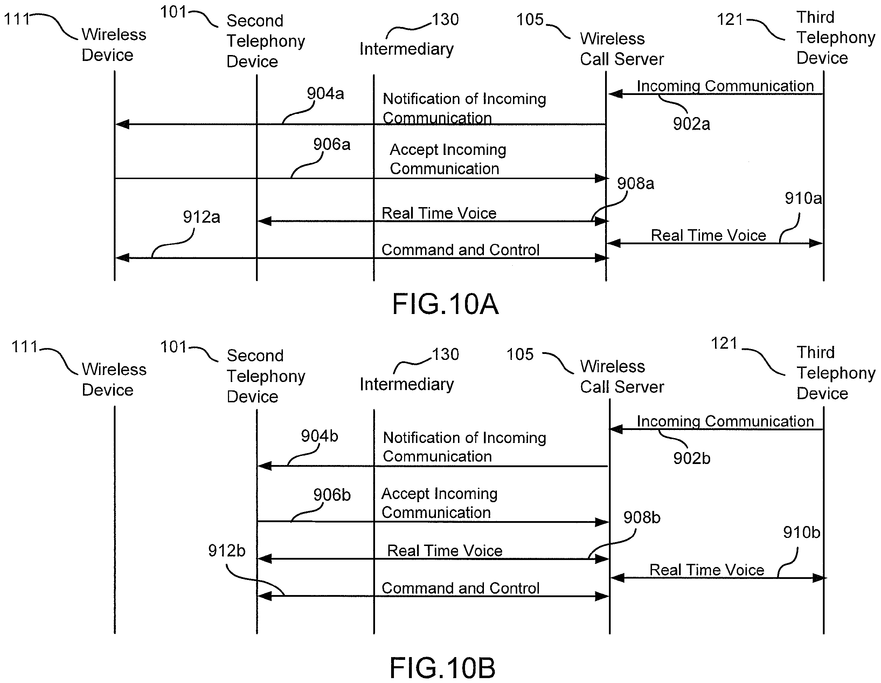

Reference will now be made to Figures 10A and 10B, which show an example of the operation of the system 100 of Figure 6 when an incoming communication has been received from a third telephony device 121 after one or more telephony functions have been transferred from wireless handheld telephony device 111 to second telephony device 101. In Figure 10A, only the voice capabilities associated with wireless handheld telephony device 111 have been transferred second telephony device 101. Command and control of the telephony functions remain with wireless handheld telephony device 111. In Figure 10B, all of the telephony functions of wireless handheld telephony device 111, including command and control of the telephony functions, have been transferred to second telephony device 101.

Referring first to Figure 10A, at 902a, an incoming communication from a third telephony device 121 to wireless handheld telephony device 111 is received by wireless call server 105.

In this example, command and control of telephony functions remains with wireless handheld telephony device 111 and hence, signals representing a notification of the incoming communication are sent to wireless handheld telephony device 111 at 904a. This may result in wireless handheld telephony device 111 alerting the user of wireless handheld telephony device 111 to the incoming communication by, for example, producing, for example, a visual and/or sound alert such as a ring tone. The user of wireless handheld telephony device 111 may then be provided with an opportunity to accept or reject the communication. If the user accepts the communication, signals representing a notification that the communication has been accepted may be sent to wireless call server 105 from wireless handheld telephony device 111 at 906a. At this point, a progress report may be communicated to the third telephony device 121 (by wireless call server 105, for example) indicating, for example, that the incoming communication has been accepted (step not shown).

If the communication is accepted, voice data received from third telephony device 121 (910a) may be directed to second telephony device 101 (908a). Similarly, voice data directed to third telephony device 121 (910a) may be received from second telephony device 101 (908a). However, according to this example, command and control data is received from and directed to wireless handheld telephony device 111. For example, when the user wishes to terminate the communication, this may be done via, for example, an input means 902 of wireless handheld telephony device 111.

Referring next to Figure 10B, at 902b, an incoming communication, directed to wireless handheld telephony device 111, is received by wireless call server 105 from third telephony device 121.

In this example, command and control of telephony functions have been transferred to second telephony device 101 and hence, signals representing a notification of the incoming communication is sent to second telephony device 101 at 904b. The user may then be provided with the opportunity to accept or reject the communication via second telephony device 101. If the user accepts the communication, signals representing a notification that the communication has been accepted are sent to wireless call server 105 from second telephony device 101 at 906b.

If the communication is accepted, voice data received from third telephony device 121 (910b) may be directed to second telephony device 101 (908b). Similarly, voice data which is directed to third telephony device 121 (910b) may be received from second telephony device 101 (908b). Command and control information may also be received from and directed to second telephony device 101. For example, when the user wishes to terminate the communication, this may be done via second telephony device 101.

As mentioned above, in some embodiments, the user may be alerted to an incoming communication on both wireless handheld telephony device 111 and second telephony device 101 and may accept the incoming communication on either device.

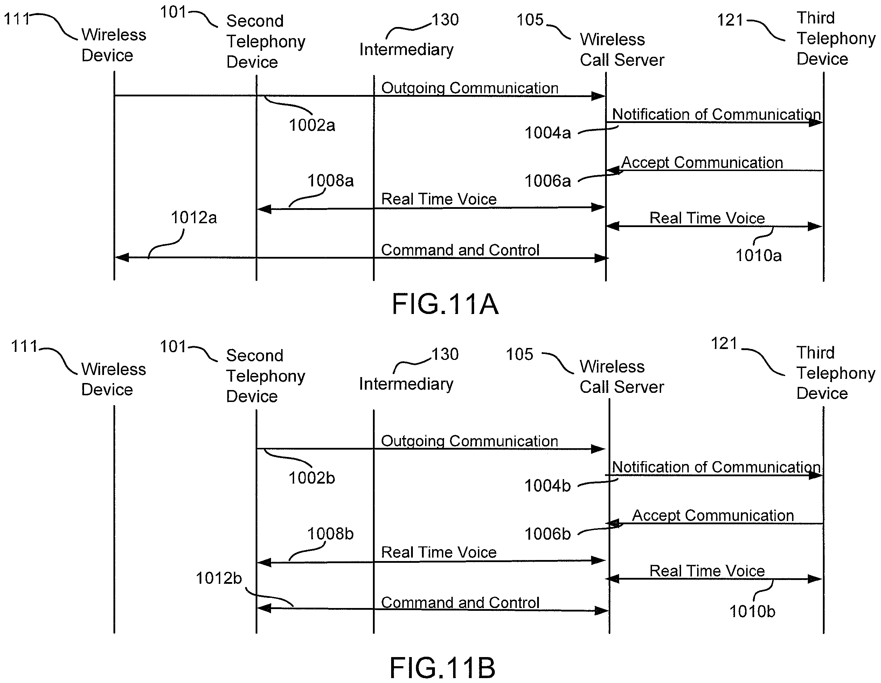

Reference will now be made to Figures 11A and 11B, which show the operation of the system 100 of Figure 6 when an outgoing communication is initiated with a third telephony device 121 after one or more telephony functions have been transferred from wireless handheld telephony device 111 to second telephony device 101. In Figure 11A, only the voice capabilities associated with wireless handheld telephony device 111 have been transferred to second telephony device 101. Command and control of the telephony functions remain with wireless handheld telephony device 111. In Figure 11B, all of the telephony functions of wireless handheld telephony device 111, including command and control of telephony functions, have been transferred to second telephony device 101.

Referring first to Figure 11A, at 1002a, an outgoing communication directed to third telephony device 121 is received by wireless call server 105. Since, in this example, command and control of telephony functions have not been transferred to second telephony device 101, the outgoing communication is initiated by wireless handheld telephony device 111. Signals representing a notification of the communication may then be sent by wireless call server 105 to third telephony device 121. The communication may be accepted or rejected by third telephony device 121. If the communication is accepted, signals representing a notification of such acceptance is sent to wireless call server 105 from third telephony device 121 at 1006a.

If the communication is accepted, voice data received from third telephony device 121 (1010a) will be directed to second telephony device 101 (1008a). Similarly, voice data which is directed to third telephony device 121 (1010a) will be received from second telephony device 101 (1008a). However, command and control information will be received from and directed to wireless handheld telephony device 111. For example, when the user wishes to terminate the communication, this may be done via, for example, an input means 902 of wireless handheld telephony device 111.

Referring next to Figure 11B, at 1002b, an outgoing communication directed to third telephony device 121 is received by wireless call server 105. Since, in this example, command and control of telephony functions has been transferred to second telephony device 101, the outgoing communication is initiated by second telephony device 101.

Signals representing a notification of the communication may then be sent by wireless call server 105 to third telephony device 121. The communication may be accepted or rejected by third telephony device 121. If the communication is accepted, signals representing a notification of such acceptance is sent to wireless call server 105 from third telephony device 121 at 1006b.

If the communication is accepted, voice data received from third telephony device 121 (1010b) may be directed to second telephony device 101 (1008b). Similarly, voice data directed to third telephony device 121 (1010b) may be received from second telephony device 101 (1008b). Command and control information may also be received from and directed to second telephony device 101. For example, when the user wishes to terminate the communication, this may be done via second telephony device 101.

It should be noted that a voice communication may already be ongoing between wireless handheld telephony device 111 and a third telephony device 121 when the one or more functions are transferred to second telephony device 101. The transferred functions will be transferred to second telephony device 101 for the ongoing communication as well as for any future communication. For example, if the voice stream is to be transferred to second telephony device 101, the voice stream of the ongoing communication will be transferred to second telephony device 101 when the devices are paired.

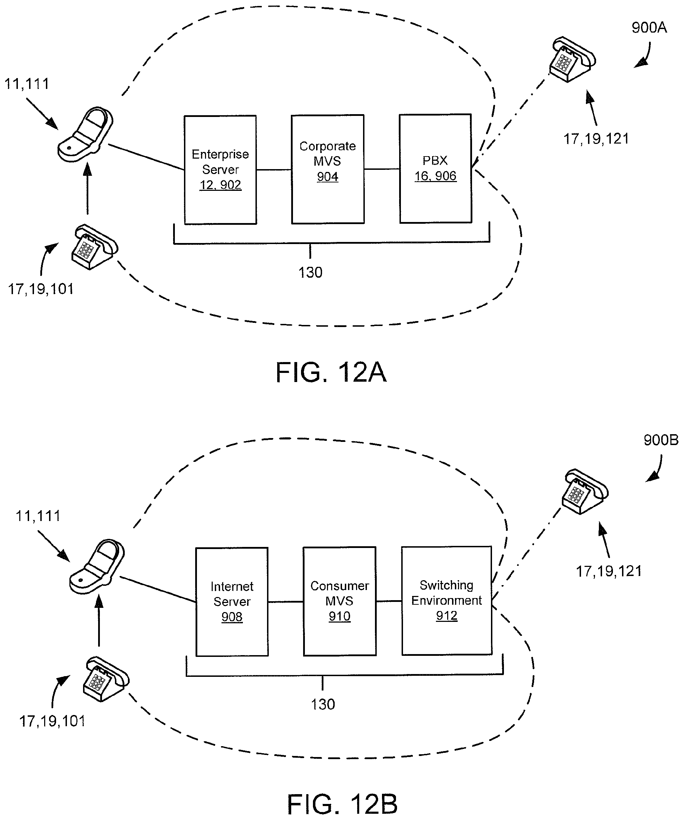

Reference will now be made to Figures 12A and 12B, which show, in block diagram form, two example systems 900A and 900B, respectively, for transferring one or more telephony functions from wireless handheld telephony device 111 to second telephony device 101. In each of these diagrams, data connections are represented by solid lines where as voice connections are represented by dashed lines. Systems 900A and 900B of Figures 12A and 12B, respectively, may represent specific examples of system 100 of Figure 6.

Referring first to Figure 12A, an example system 900A for transferring one or more telephony functions is shown involving a corporate or enterprise environment. In this example, intermediary 130 comprises enterprise server 12, 902, corporate mobile voice server (MVS) 904, and PBX 16, 906. Wireless handheld telephony device 111 may engaged in telephony functions with, for example, a third telephony device 121 through PBX 906. In this embodiment, second telephony device 101 may be another corporate telephony device which is configured to communicate through PBX 906.

Wireless handheld telephony device 111 may send and/or receive wireless signals to/from second telephony device 101 as described above. Wireless handheld telephony device 111 and/or second telephony device 101 may send identifying information received through the wireless signals to enterprise server 902 and corporate MVS 904. Using this information, corporate MVS 904 may instruct PBX 906 to transfer the telephony functions from wireless handheld telephony device 111 to second telephony device 101. For example, extension information for wireless handheld telephony device 111 and address information for second telephony device 101 may be communicated to the PBX control software. The PBX control software may then provision second telephony device 101 with the identity of wireless handheld telephony device 111 including extension association.

Referring next to Figure 12B, an example system 900B for transferring one or more telephony functions is shown involving a consumer environment. In this embodiment, intermediary 130 comprises internet server 908, consumer MVS 910 and switching environment 912. Wireless handheld telephony device 111 may engaged in telephony functions with, for example, a third telephony device 121 through switching environment 912. In this embodiment, second telephony device 101 may be a public telephony device which is capable of communicating through switching environment 912.

Wireless handheld telephony device 111 may send and/or receive wireless signals to/from second telephony device 101 as described above. Wireless handheld telephony device 111 and/or second telephony device 101 may send identifying information received through the wireless signals through a data connection to internet server 908 which is connected to consumer MVS 910. Switching environment 912 may then be directed to transfer the telephony functions from wireless handheld telephony device 111 to second telephony device 101. In some embodiments, where second telephony device 101 is configured for voice communications over the internet (such as a Skype-enabled device), the authorized telephony functions may occur via switching environment 912 over the internet using IP addressing. In other embodiments, the telephony functions may occur via switching environment 912 over, for example a PSTN such as PSTN 40 of Figure 1.

## Claims

1. A method enabling a system (10) to transfer one or more telephony functions associated with a wireless handheld telephony device (11, 111) to a second telephony device (17, 101), for redirecting voice communication directed to the wireless handheld telephony device (11, 111) to the second telephony device (17, 101), the system comprising a data processor, media readable by the data processor, a call server (105) and optionally an intermediary (130), the call server (105) or intermediary (130) comprising a Private Branch exchange (PBX), the PBX adapted to route incoming calls addressed to any extension, the method comprising:
when the wireless handheld telephony device (11, 111) comes into the proximity of the second telephony device (17, 101), pairing (704) of the wireless handheld telephony device (11, 111) and the second telephony device (17, 101);
upon pairing, extension information for the wireless handheld telephony device (11, 111) and address information for the second telephony device (17, 101) is communicated (706) to the PBX which then provisions second telephony device (17, 101) with the identity of wireless handheld telephony device (11, 111) such that when an incoming communication for the wireless handheld telephony device (11, 111) is received by the call server (105) from a third telephony device (121), a notification of the incoming communication is sent (902b, 904b) to the second telephony device (17, 101) and if the communication is accepted (906b) by the second telephony device (17, 101), voice data received from the third telephony device (121) is directed (908b, 910b) to the second telephony device (17, 101);
wherein during pairing the address information is sent (802) directly from the second telephony device (17, 101) to the wireless handheld telephony device (11, 111) which sends (804) a request, including the address information, for authentication of the second telephony device (17, 101) to the call server (105) which confirms (806) that the address information provided by the second telephony device (17, 101) is not false and the extension information is sent (808) directly from the wireless handheld telephony device (11, 111) to the second telephony device (17, 101) which sends (810) a request, including the extension information, for authentication of the wireless handheld telephony device (11, 111) to the call server (105) which confirms (812) that the extension information provided by the wireless handheld telephony device (11, 111) is not false.

2. The method of claim 1, wherein the signals representing a request to transfer one or more telephony functions are received from at least one of the handheld wireless telephony device (11, 111) and the second telephony device (17, 101).

3. The method of claim 1 or claim 2, comprising transmission by the second telephony device (17, 101) of signals useful for establishing communications between the wireless handheld telephony device (11, 111) and the second telephony device (17, 101).

4. The method of any one of claims 1 to 3, comprising selection of the second telephony device (17, 101) from one or more telephony devices (17, 101) in range of the wireless handheld telephony device (11, 111).

5. The method of any one of claims 1 to 4, comprising transfer of at least one of the voice capabilities and the additional telephony functions related to command and control of communications back to the wireless handheld telephony device (11, 111).

6. The method of claim 5, wherein the transfer back to the wireless handheld telephony device (11, 111) of the at least one telephony functions occurs automatically upon the wireless handheld telephony device (11, 111) leaving a proximity of the second telephony device (17, 101).

7. The method of claim 5 or claim 6, wherein data associated with at least one of the wireless handheld telephony device (11, 111) and the voice communications session is deleted from the second telephony device (17, 101) during transfer back to the wireless handheld telephony device (11, 111).

8. The method of any one of claims 5 to 7, wherein data stored in the second telephony device (17, 101) that is associated with at least one of the wireless handheld telephony device (11, 111) and the voice communications sessions is transmitted to the wireless handheld telephony device (11, 111) upon the transfer back to the wireless handheld telephony device (11, 111).

9. The method of any one of claims 1 to 8, wherein transfer of the voice capabilities and the one or more additional telephony functions related to command and control of communications comprises a duplication of the voice capabilities and the one or more additional telephony functions related to command and control of communications from the wireless handheld telephony device (11, 111) to the second telephony device (17, 101).

10. A system (10) configured to transfer one or more telephony functions associated with a wireless handheld telephony device (11, 111) to a second telephony device (17, 101), for redirecting voice communication directed to the wireless handheld telephony device (11, 111) to the second telephony device (17, 101), the system (10) comprising:
a call server (105) and optionally an intermediary (130), the call server (105) or intermediary (130) comprising a Private Branch eXchange (PBX), the PBX adapted to route incoming calls addressed to any extension, the call server (105) including a data processor, media readable by the data processor, and a communications subsystem;
the communications subsystem adapted to process signals representing communications by and between the wireless handheld telephony device (11, 111), the second telephony device (17, 101), and the processor; and
the media readable by the data processor comprising coded program instructions adapted to cause the processor to carry out the method of any one of claims 1 to 9.

11. The system (10) of claim 10, wherein one or more wireless signals useful for establishing communications with the second telephony device (17, 101) are pulled from the second telephony device (17, 101) by the wireless handheld telephony device (11, 111),

12. The system (10) of claim 11, wherein the second telephony device comprises (17, 101) an RFID transponder and the wireless handheld telephony device (11, 111) further comprises an RFID transmitter (906) adapted to pull the wireless signals from the RFID transponder.

## Patentansprüche

1. Verfahren, das ein System (10) in die Lage versetzt, eine oder mehrere Telefonfunktionen, die einem drahtlosen, tragbaren Telefongerät (11, 111) zugeordnet sind, auf ein zweites Telefongerät (17, 101) zu übertragen, um Sprachkommunikation, die an das drahtlose, tragbare Telefongerät (11, 111) gerichtet ist, an das zweite Telefongerät (17, 101) umzuleiten, wobei das System einen Datenprozessor, Medien, die von dem Datenprozessor gelesen werden können, einen Call-Server (105) und optional einen Vermittler (130) umfasst, wobei der Call-Server (105) oder der Vermittler (130) eine Nebenstellenanlage (PXB - Private Branch eXchange) umfasst, wobei die PXB dafür eingerichtet ist, eingehende Anrufe zu leiten, die an einen Nebenanschluss gerichtet sind, wobei das Verfahren Folgendes umfasst:
wenn das drahtlose, tragbare Telefongerät (11, 111) in die Nähe des zweiten Telefongeräts (17, 101) kommt, Koppeln (704) des drahtlosen, tragbaren Telefongeräts (11, 111) mit dem zweiten Telefongerät (17, 101),
nach dem Koppeln Kommunizieren (706) von Nebenanschlussinformationen für das drahtlose, tragbare Telefongerät (11, 111) und Adressinformationen für das zweite Telefongerät (17, 101) an die PXB, die dann die Identität des drahtlosen, tragbaren Telefongeräts (11, 111) für das zweite Telefongerät (17, 101) bereitstellt, so dass, wenn am Call-Server (105) eine von einem dritten Telefongerät (121) eingehende Kommunikation für das drahtlose, tragbare Telefongerät (11, 111) empfangen wird, an das zweite Telefongerät (17, 101) eine Benachrichtigung über die eingehende Kommunikation gesendet wird (902b, 904b), und wenn die Kommunikation durch das zweite Telefongerät (17, 101) angenommen wird (906b), Sprachdaten, die von dem dritten Telefongerät (212) empfangen werden, an das zweite Telefongerät (17, 101) gerichtet werden,
wobei während des Koppelns die Adressinformationen direkt von dem zweiten Telefongerät (17, 101) an das drahtlose, tragbare Telefongerät (11, 111) gesendet werden (802), das eine Anfrage zur Authentifizierung des zweiten Telefongeräts (17, 101), welche die Adressinformationen beinhaltet, an den Call-Server (105) sendet (804), der bestätigt (806), dass die von dem zweiten Telefongerät (17, 101) bereitgestellten Adressinformationen nicht falsch sind, und die Nebenanschlussinformationen direkt von dem drahtlosen, tragbaren Telefongerät (11, 111) an das zweite Telefongerät (17, 101) gesendet werden (808), das eine Anfrage zur Authentifizierung des drahtlosen, tragbaren Telefongeräts (11, 111), welche die Nebenanschlussinformationen beinhaltet, an den Call-Server (105) sendet (810), der bestätigt (812), dass die von dem drahtlosen, tragbaren Telefongerät (11, 111) bereitgestellten Nebenanschlussinformationen nicht falsch sind.

2. Verfahren nach Anspruch 1, wobei die Signale, die eine Anfrage zum Übertragen einer oder mehrerer Telefonfunktionen darstellen, von dem drahtlosen, tragbaren Telefongerät (11, 111) und/oder von dem zweiten Telefongerät (17, 101) empfangen werden.

3. Verfahren nach Anspruch 1 oder Anspruch 2, das Übermitteln von Signalen durch das zweite Telefongerät (17, 101) umfassend, die verwendbar sind, um Kommunikationen zwischen dem drahtlosen, tragbaren Telefongerät (11, 111) und dem zweiten Telefongerät (17, 101) einzurichten.

4. Verfahren nach einem der Ansprüche 1 bis 3, das Auswählen des zweiten Telefongeräts (17, 101) aus einem oder mehreren Telefongeräten (17, 101) innerhalb der Reichweite des drahtlosen, tragbaren Telefongeräts (11, 111) umfassend.

5. Verfahren nach einem der Ansprüche 1 bis 4, das Rückübertragen der Sprachfähigkeiten und/oder der zusätzlichen Telefonfunktionen, die Befehl und Steuerung der Kommunikationen betreffen, auf das drahtlose, tragbare Telefongerät (11, 111).

6. Verfahren nach Anspruch 5, wobei das Rückübertragen der mindestens einen Telefonfunktion auf das drahtlose, tragbare Telefongerät (11, 111) automatisch erfolgt, nachdem das drahtlose, tragbare Telefongerät (11, 111) eine Nähe des zweiten Telefongeräts (17, 101) verlassen hat.

7. Verfahren nach Anspruch 5 oder 6, wobei Daten, die dem drahtlosen, tragbaren Telefongerät (11, 111) und/oder der Sprachkommunikationssitzung zugeordnet sind, während der Rückübertragung auf das drahtlose, tragbare Telefongerät (11, 111) von dem zweiten Telefongerät (17, 101) gelöscht werden.

8. Verfahren nach einem der Ansprüche 5 bis 7, wobei Daten, die in dem zweiten Telefongerät (17, 101) gespeichert sind, die dem drahtlosen, tragbaren Telefongerät (11, 111) und/oder den Sprachkommunikationssitzungen zugeordnet sind, nach der Rückübertragung auf das drahtlose, tragbare Telefongerät (11, 111) an das drahtlose, tragbare Telefongerät (11, 111) übermittelt werden.

9. Verfahren nach einem der Ansprüche 1 bis 8, wobei das Übertragen der Sprachfähigkeiten und der einen oder mehreren zusätzlichen Telefonfunktionen, die Befehl und Steuerung der Kommunikationen betreffen, eine Duplizierung der Sprachfähigkeiten und der einen oder mehreren zusätzlichen Telefonfunktionen, die Befehl und Steuerung von Kommunikationen betreffen, von dem drahtlosen, tragbaren Telefongerät (11, 111) zu dem zweiten Telefongerät (17, 101) umfasst.

10. System (10), dafür konfiguriert, eine oder mehrere Telefonfunktionen, die einem drahtlosen, tragbaren Telefongerät (11, 111) zugeordnet sind, auf ein zweites Telefongerät (17, 101) zu übertragen, um Sprachkommunikation, die an das drahtlose, tragbare Telefongerät (11, 111) gerichtet ist, an das zweite Telefongerät (17, 101) umzuleiten, wobei das System (10) Folgendes umfasst:
einen Call-Server (105) und optional einen Vermittler (130), wobei der Call-Server (105) oder der Vermittler (130) eine Nebenstellenanlage (PXB - Private Branch eXchange) umfasst, wobei die PXB dafür eingerichtet ist, eingehende Anrufe zu leiten, die an einen Nebenanschluss gerichtet sind, wobei der Call-Server (105) einen Datenprozessor, Medien, die von dem Datenprozessor gelesen werden können, und ein Kommunikationsteilsystem beinhaltet,
wobei das Kommunikationsteilsystem dafür eingerichtet ist, Signale zu verarbeiten, die Kommunikationen durch und zwischen dem drahtlosen, tragbaren Telefongerät (11, 111), dem zweiten Telefongerät (17, 101) und dem Prozessor darstellen, und
die Medien, die durch den Datenprozessor gelesen werden können, codierte Programmanweisungen umfassen, die dafür eingerichtet sind, den Prozessor zu veranlassen, das Verfahren nach einem der Ansprüche 1 bis 9 auszuführen.

11. System (10) nach Anspruch 10, wobei ein oder mehrere Funksignale, die zum Einrichten von Kommunikationen mit dem zweiten Telefongerät (17, 101) verwendbar sind, durch das drahtlose, tragbare Telefongerät (11, 111) von dem zweiten Telefongerät (17, 101) gezogen werden.

12. System (10) nach Anspruch 11, wobei das zweite Telefongerät (17, 101) einen RFID-Transponder umfasst und das drahtlose, tragbare Telefongerät (11, 111) ferner einen RFID-Sender (906) umfasst, der dafür eingerichtet ist, die Funksignale von dem RFID-Transponder zu ziehen.

## Revendications

1. Procédé permettant à un système (10) de transférer une ou plusieurs fonctions de téléphonie associées à un dispositif de téléphonie portable sans fil (11,111) à un deuxième dispositif de téléphonie (17,101), pour rediriger une communication vocale dirigée vers le dispositif de téléphonie portable sans fil (11,111) au deuxième dispositif de téléphonie (17,101), ce système comprenant un processeur de données, un support lisible par le processeur de données, un serveur d'appels (105) et en option un intermédiaire (130), le serveur d'appels (105) ou intermédiaire (130) comprenant un central téléphonique privé (PBX), le PBX étant apte à router des appels entrants adressés à toute extension, ce procédé comprenant :
lorsque le dispositif de téléphonie portable sans fil (11,111) vient à proximité du deuxième dispositif de téléphonie (17,101), l'appariement (104) du dispositif de téléphonie portable sans fil (11,111) et du deuxième dispositif de téléphonie (17,101) ;
à l'appariement, des informations d'extension pour le dispositif de téléphonie portable sans fil (11,111) sont communiquées (706) au PBX qui fournit ensuite au deuxième dispositif de téléphonie (17,101) l'identité du dispositif de téléphonie portable sans fil (11,111) de manière à ce que, lorsqu'une communication entrante pour le dispositif de téléphonie portable sans fil (11,111) est reçue par le serveur d'appels (105) en provenance d'un troisième dispositif de téléphonie (121), une notification de la communication entrante est envoyée (902b, 904b) au deuxième dispositif de téléphonie (17,101) et, si la communication est acceptée (906b) par le deuxième dispositif de téléphonie (17,101), les données vocales reçues en provenance du troisième dispositif de téléphonie (121) sont dirigées (908b, 910b) vers le deuxième dispositif de téléphonie (17,101) ;
si, pendant l'appariement, les informations d'adresse sont envoyées (802) directement par le deuxième dispositif de téléphonie (17,101) au dispositif de téléphonie portable sans fil (11,111) qui envoie (804) une requête incluant les informations d'adresse pour authentification du deuxième dispositif de téléphonie (17, 101) au serveur d'appels (105) qui confirme (806) que les informations d'adresse fournies par le deuxième dispositif de téléphonie (17,101) ne sont pas fausses et que les informations d'extension sont envoyées (800) directement par le dispositif de téléphonie portable sans fil (11,111) au deuxième dispositif de téléphonie (17,101) qui envoie (810) une requête incluant les informations d'extension pour authentification du dispositif de téléphonie portable sans fil (11,111) au serveur d'appels (105) qui confirme (812) que les informations d'extension fournies par le dispositif de téléphonie portable sans fil (11,111) ne sont pas fausses.

2. Procédé selon la revendication 1, dans lequel les signaux représentant une requête de transfert d'une ou plusieurs fonctions de téléphonie sont reçus par au moins un parmi le dispositif de téléphonie portable sans fil (11,111) et le deuxième dispositif de téléphonie (17,101).

3. Procédé selon la revendication 1 ou la revendication 2, comprenant la transmission par le deuxième dispositif de téléphonie (17,101) de signaux utiles pour établir des communications entre le dispositif de téléphonie portable sans fil (11,111) et le deuxième dispositif de téléphonie (17,101).

4. Procédé selon l'une quelconque des revendications 1 à 3, comprenant la sélection du deuxième dispositif de téléphonie (17,101) parmi un ou plusieurs dispositifs de téléphonie (17,101) de type dispositif de téléphonie portable sans fil (11,111).

5. Procédé selon l'une quelconque des revendications 1 à 4, comprenant le transfert d'au moins une des capacités vocales et des fonctions de téléphonie supplémentaires concernant la commande et le contrôle des communications en retour au dispositif de téléphonie portable sans fil (11,111).

6. Procédé selon la revendication 5, dans lequel le transfert en retour au dispositif de téléphonie portable sans fil (11,111) de l'au moins une fonction de téléphonie a lieu automatiquement lorsque le dispositif de téléphonie portable sans fil (11,111) quitte la proximité du deuxième dispositif de téléphonie (17,101).

7. Procédé selon la revendication 5 ou la revendications 6, dans lequel les données associées à au moins un des dispositifs de téléphonie portables sans fil (11,111) et la session de communication vocale sont effacées du deuxième dispositif de téléphonie (17,101) pendant le transfert en retour au dispositif de téléphonie portable sans fil (11,111).

8. Procédé selon l'une quelconque des revendications 5 à 7, dans lequel les données enregistrées dans le deuxième dispositif de téléphonie (17,101) qui sont associées à au moins un des dispositifs de téléphonie portables sans fil (11,111) et les sessions de communication vocale sont transmises au dispositif de téléphonie portable sans fil (11,111) lors du transfert en retour vers le dispositif de téléphonie portable sans fil (11,111).

9. Procédé selon l'une quelconque des revendications 1 à 8, dans lequel le transfert des capacités vocales et de l'une ou des plusieurs fonctions de téléphonie supplémentaires concernant la commande et le contrôle des communications comprend une duplication des capacités vocales et des une ou plusieurs fonctions de téléphonie supplémentaires concernant la commande et le contrôle des communications depuis le dispositif de téléphonie portable sans fil (11,111) vers le deuxième dispositif de téléphonie (17,101).

10. Système (10) conçu pour transférer une ou plusieurs fonctions de téléphonie associées à un dispositif de téléphonie portable sans fil (11,111) à un deuxième dispositif de téléphonie (17,101), pour rediriger une communication vocale dirigée vers le dispositif de téléphonie portable sans fil (11,111) vers le deuxième dispositif de téléphonie (17,101), ce système comprenant :
un serveur d'appels (105) et en option un intermédiaire (130), le serveur d'appels (105) ou intermédiaire (130) comprenant un central téléphonique privé (PBX), le PBX étant apte à router des appels entrants adressés à toute extension, le serveur d'appels (105) comprenant un processeur de données, un support lisible par le processeur de données, et un sous-système de communication ;
le sous-système de communication étant apte à traiter des signaux représentant des communications par et entre le dispositif de téléphonie portable sans fil (11,111), le deuxième dispositif de téléphonie (17,101), et le processeur ; et
le support lisible par le processeur de données comprenant des instructions de programme codées aptes à amener le processeur à réaliser le procédé selon l'une quelconque des revendications 1 à 9.

11. Système (10) selon la revendication 10, dans lequel un ou plusieurs signaux sans fil utiles pour établir des communications avec le deuxième dispositif de téléphonie (17,101) sont extraits du deuxième dispositif de téléphonie (17,101) par le dispositif de téléphonie portable sans fil (11,111).

12. Système (10) selon la revendication 10, dans lequel le deuxième dispositif de téléphonie (17,101) comprend un transpondeur RFID et le dispositif de téléphonie portable sans fil (11,111) apte à extraire les signaux sans fil du transpondeur RFID.
